# EUROPEAN PATENT APPLICATION

(11) **EP 4 358 037 A1**
(43) Date of publication of application: **24.04.2024**
(21) Application number: 22202173.5
(22) Date of filing: 18.10.2022
(51) Int. Cl.: G06V 20/52, G06V 40/10, G06V 40/20, G06V 10/25

(54) **DE-IDENTIFYING SENSITIVE INFORMATION**

(71) Applicant: Koninklijke Philips N.V., 5656 AG Eindhoven (NL)
(72) Inventor: JELFS, Sam Martin, Eindhoven (NL); MEULENDIJKS, Paul, Eindhoven (NL); KREMER, Frans Henk, 5656AG Eindhoven (NL); SALIM, Hizirwan, 5656AG Eindhoven (NL); VAN GENUGTEN, Lenneke, Eindhoven (NL); VAN EE, Raymond, Eindhoven (NL)
(74) Representative: Philips Intellectual Property & Standards

(57) **Abstract**

A method is provided for de-identifying sensitive information. The method comprises obtaining a three dimensional, 3D, model of a scene, identifying a region of interest, ROI, in the 3D model corresponding to sensitive information and modifying the 3D model of the scene to de-identify the sensitive information contained in the ROI.

## Description

### FIELD OF THE INVENTION

The invention relates to the field of de-identifying sensitive information. In particular, the invention relates to de-identifying sensitive information captured from a 3D imaging system.

### BACKGROUND OF THE INVENTION

For any communication system, privacy is often an essential feature. Sharing information with a receiver often requires any sensitive information, that is not needed by the receiving party, to be hidden from the receiver.

This is a well-known problem and is relatively easy to solve for some cases. For example, when there is a single camera at a fixed position the position of the sensitive information in the frames can be blurred/removed. The same logic can be applied when a video is captured, post processed, and only later made available to others.

However, if the video is captured from a moving camera (e.g. body camera from a surgeon), or from a multiple-sensor 3D capture/imaging system, and is transmitted in real-time, then a new method for de-identifying sensitive information is needed.

For example, in the case of a surgeon performing an operation that is being transmitted to students remotely, it may be that the face, or other identifying features (e.g. tattoos etc.), of the patient and/or health care providers need to be blurred. Additionally, details such as names, patient identification numbers, social security numbers, etc., which may be on monitoring screens, may need to be removed.

If a room such as a surgical suite is captured in 3D and rendered in such a way that the users and/or camera may freely move throughout the scene, then it can never be known where the camera is at any point. If there are objects, persons and/or information in the captured scene that should not be displayed to the viewer, then those items must be dynamically removed or blurred in real-time so as to ensure that privacy is maintained.

Thus, there is a need for a method capable of de-identifying sensitive information imaged by 3D capture systems.

### SUMMARY OF THE INVENTION

The invention is defined by the claims.

According to examples in accordance with an aspect of the invention, there is provided a method for de-identifying sensitive information, the method comprising:
obtaining a three dimensional, 3D, model of a scene;
identifying a region of interest, ROI, in the 3D model corresponding to sensitive information; and
modifying the 3D model of the scene to de-identify the sensitive information contained in the ROI.

Modifying the 3D model of the scene, to de-identify sensitive information, enables the user to be sure that, when an image is rendered from the 3D model at any viewport, the rendered image will also be de-identified. As such, it is not necessary to de-identify each image individually.

The ROI is a 3D region of interest. The 3D model can be a mesh, a point cloud or any other volumetric representation of the room.

Identifying the ROI within the 3D model can be achieved through automatic detection, user input, or other any other means. Of course, more than one ROI can be identified in the 3D model.

Modifying the 3D model removes, blurs, replaces or otherwise distorts the information in the ROI such that no privacy sensitive data in that region remains or is identifiable.

The method may further comprise generating a two dimensional, 2D, image of the scene at a target viewport using the modified 3D model.

Any image generated from the modified 3D model will be de-identified as the 3D model itself is de-identified after being modified.

Modifying the 3D model for example comprises modifying texture values of the ROI in the 3D model.

Modifying the 3D model for example comprises modifying a geometry of the ROI in the 3D model. Modifying a geometry distorts the 3D model such that the modified 3D model does not contain any information which can lead to the identification of the information in the ROI. Thus, the modification can be achieved without requiring the texture of the 3D model to be modified, which may make the resulting 3D model look more natural whilst still being de-identified.

For example, the face-shape of a person in the 3D model can be modified to a different shape, whilst keeping the original texture values. Thus, the person will still look like a person in the 3D model but cannot be identified from the model itself.

The method may further comprise:
receiving a non-modified image of the scene taken at a camera viewport;
identifying an area of the non-modified image corresponding to the projection of the ROI from the camera viewport; and
modifying the identified area in the non-modified image to de-identify the information contained in the ROI.

This allows other images to be de-identified by using the 3D model. For example, an additional camera may provide a better image (e.g. higher quality/resolution) than a rendered image. Thus, these images can be efficiently modified by converting (i.e. projecting) the ROI to the viewport of the camera. Thus, the modified images can be used alongside the modified 3D model to view the scene.

Identifying the ROI may comprise identifying a person in the scene, estimating the pose of the identified person and determining whether the pose corresponds to a pre-determined pose. It may for example be known that only people in certain pose (e.g. lying down on a patient couch) need to be de-identified.

The method may further comprise:
receiving a verification that the ROI is in the correct position relative to the position of the sensitive information in the 3D model; and
modifying the position of the ROI based on the verification.

This enables a check to be implemented that the de-identification will correctly take place.

The invention also provides a computer program carrier comprising computer program code which, when executed on a processing system, cause the processing system to perform all of the steps of the method described above.

The invention also provides a system for de-identifying sensitive information, the system comprising a processor configured to:
obtain a three dimensional, 3D, model of a scene;
identify a region of interest, ROI, in the 3D model corresponding to sensitive information; and
modify the 3D model of the scene to de-identify the sensitive information contained in the ROI.

This system performs the processing of the 3D model using the method described above.

The processor is for example further configured to generate a two dimensional, 2D, image of the scene at a target viewport using the modified 3D model.

The processor is for example configured to modify the 3D model by modifying texture values of the ROI in the 3D model and/or modifying geometry values of the ROI in the 3D model.

The processor may be further configured to:
receive a non-modified image of the scene taken at a camera viewport;
identify pixels in the non-modified image corresponding to the projection of the ROI from the camera viewport; and
modify the identified pixels in the non-modified image to de-identify the information contained in the ROI.

The processor may be configured to identify the ROI by identifying a person in the scene, estimating the pose of the identified person and determining whether the pose corresponds to a predetermined pose.

The system may further comprise a 3D imaging system configured to generate the 3D model of the scene.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a first method for de-identifying sensitive information in a 3D model of a scene;
Fig. 2 shows a second method for de-identifying sensitive information in a 3D model of a scene;
Fig. 3 shows a third method for de-identifying sensitive information in a 3D model of a scene; and
Fig. 4 shows a system for de-identifying sensitive information in a 3D model of a scene.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for de-identifying sensitive information. The method comprises obtaining a three dimensional, 3D, model of a scene, identifying a region of interest, ROI, in the 3D model corresponding to sensitive information and modifying the 3D model of the scene to de-identify the sensitive information contained in the ROI.

Note that the scene could be any scene containing an object, person and/or information which is sensitive. Sensitive information may include the face, or any feature, of a person as well as any information which that person may consider sensitive. Of course, whether information is sensitive or not can often depend the particular case. Thus, the sensitivity of information may need to be assessed on a case-by-case basis. For example, a particular piece of information may, or may not, be sensitive information depending on the receiver.

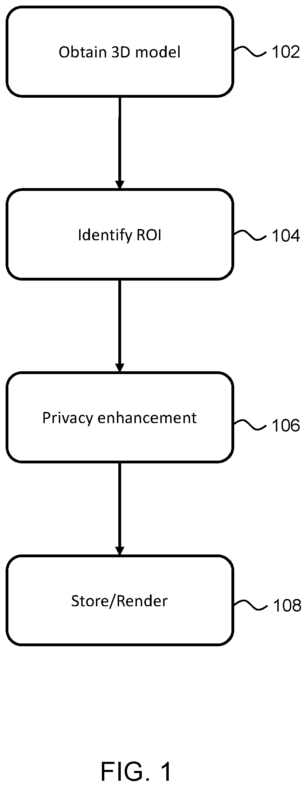

Fig. 1 shows a first method for de-identifying sensitive information in a 3D model. In step 102, a 3D model of a scene is obtained. The 3D model can be obtained directly from a 3D capture/imaging system.

A number of different technologies exist for the real-time 3D capture of an area/scene. These include systems with multiple cameras and laser imaging, detection, and ranging (LIDAR) based systems. These systems can produce a geometric representation of the scene they are imaging (e.g. mesh representation, point cloud representation etc.). In other words, these systems produce a 3D model of the scene. This can then be used to render an image onto a 2D display such that a viewer can move a virtual camera to any place within the scene. The 3D model could also be used to render views for an augmented reality (AR)/virtual reality (VR) device for a more immersive experience. In these cases, two 2D images are rendered at viewports which simulate the positions of the eyes of the user, thereby providing a 3D experience to the user. These immersive environments can be used for remote teaching and education.

The 3D capture system used to obtain the 3D model in step 102 may be one of the already known methods of capturing a scene in real time as discussed above (e.g. LIDAR or camera based system). The 3D capture system will produce a 3D model of the scene (e.g. a room) and all objects inside it as, for example, a textured mesh, point cloud or other volumetric representation. This is done in real-time, similar to a video camera, but rather than producing a 2D video image, it produces a 3D model that can be rendered to a 2D projection from any angle (viewport), or rendered into a virtual environment for viewing in VR/AR. Typically the 3D model will consist of geometric information that defines the shape, size and location of all objects in the space. The 3D model can also include textural information (e.g. color and transparency) that defines the color of the points, or faces, of the geometric information.

In step 104, a region of interest (ROI) in the 3D model is identified. In essence, regions (ROIs) within the 3D model that need to be blurred (or otherwise modified) for privacy reasons, or due to commercial sensitivity, are identified. This may be achieved through a number of methods.

The ROI(s) may be placed at a predetermined location in the scene. In the case where sensitive information/objects cannot move in the scene, the ROI can be placed at a static position in the 3D model. For example, the head location of a patient on a fixed surgical table, or the location of the table of an MRI machine, are fixed objects which can be identified based on their position in the scene. For standardized scenes (e.g. an operating room), the ROI placements can be taken from a database of ROIs.

Visual markers could be attached to locations in the scene that may physically move. This enables the movement of the object/information (e.g., a display) to be tracked as it moves around the scene. As such, the ROI can be placed, and their position modified, based on the tracking of the object/information.

The ROI can also be linked to known information of the scene. For example, in the case where a screen in present in the scene, the information currently being displayed on the screen can determine whether a ROI is placed around the screen. This means that when the screen changes, the ROI can adjust automatically to modify only specific sections of the display. For example, the screen may change from showing non-sensitive information (e.g. heart rate, blood pressure etc.) to showing personal information of the patient (e.g. age, gender etc.). Thus, the ROI can change when a change in the screen is detected. Of course, only certain parts of the screen could be determined to be a ROI if it is known where on the screen the sensitive information will be shown.

In some cases, devices in the scene can provide additional information. For example, the position of the table in an MRI scanner can be obtained from the MRI scanner itself. Thus, it can be assumed that location of the patient will be fixed relative to the table. As such, the position of the table, obtained from the MRI scanner, can be used as an anchor point to a ROI covering the patient. Thus, the ROI can track the patient as the table moves into/out of the machine.

Similarly, pose estimation of the people within the scene can be used to identify the ROI. In the case where the scene is an operating room (or other medical scene), the patient is likely the only person in the scene that will be horizontal. As such, when a person is determined to be horizontal (or at least not vertical), one can assume that a ROI can be placed on that person.

The ROI could be determined by using trackable hardware, such as Bluetooth trackers. This would be beneficial if an individual person, in a group of people, does not want to be captured, as this would allow easy determination of the individual people within the room/scene which, for example, do not want to be imaged.

Of course, image recognition algorithms, such as facial recognition or object recognition could be used to identify the ROI. Additionally, an AR headset, or other interface device, can be used by a user to manually specify a 3D region within the space to treat as a ROI.

All ROIs can be stored into a database for future use.

In step 106, the 3D model is modified to de-identify the information contained in the ROI. This can be referred to as a "privacy enhancement" of the 3D model. Privacy enhancement can be achieved through a number of means, such as blurring, removing and/or replacing the information in the ROI. In one example, the texture values of the ROI can be blurred, removed and/or replaced (e.g. the color of the ROI can be modified). Additionally, or alternatively, the geometry values (e.g. the coordinates of points/meshes in the 3D model) can be blurred, removed and/or replaced thereby to distort the geometry of the ROI in the 3D model.

The texture information of the ROI in the 3D model could be modified whilst keeping the geometry as it is. This would typically be sufficient to remove privacy sensitive information from display screens, for example.

If there is a particular reason for the ROI selection (e.g. ROI metadata specifying the reason for ROI selection), it may possible to replace the information contained in the ROI rather than remove it completely.

For example, in a medical setting, it may be appropriate and/or relevant to know the patient's approximate age. However, displaying a date of birth would violate privacy. Thus, the date of birth on a screen could be replaced with, for example, a range of ages (e.g. patient is between 60 and 65).

Any personal indicators/features on a person (e.g. tattoos, scars etc.) should preferably be removed and/or replaced (e.g. make the skin appear tattoo-less). This is because, if personal indicators/features are blurred, their position is still apparent in the 3D model. This may be considered sensitive information.

As discussed above, the geometry of the ROI in the 3D model can be modified to de-identify the information in the ROI. For example, the geometry of the ROI could be completely removed from the scene. As such, the sensitive information would not be visible in the 3D model.

Removal of the sensitive information in the 3D model is of particular benefit compared to removal of sensitive information in a 2D image. It means multiple 2D images from any desired viewing location may be generated without requiring further image processing. Removal of the sensitive information in the 3D model also will not cause a blank area in the rendered images where the information was removed (i.e. objects behind the sensitive information will be shown in the rendered images).

Of course, the geometry of the ROI in the 3D model can also be blurred, distorted or replaced to make the sensitive information appear geometrically different in the modified 3D model.

Modification of the geometry of the ROI can be achieved by, for example, modifying the coordinates of the points in a point cloud, modifying the relative position of vertices in a mesh or moving/removing voxels in a volumetric 3D model.

The modified 3D model can then be stored, transmitted or used to render a 2D (de-identified) image of the scene in step 108. For example, if the modified 3D model is not required for immediate use, it can be stored and later used to render 2D images at a target viewport. Of course, the modified 3D model can be used to render real-time 2D images/frames to a user. Thus, the user can view the scene in real-time from a target viewport of their choice and there is no risk of the target viewport containing sensitive information, as the sensitive information has already been modified at the 3D model before any images/frames are rendered.

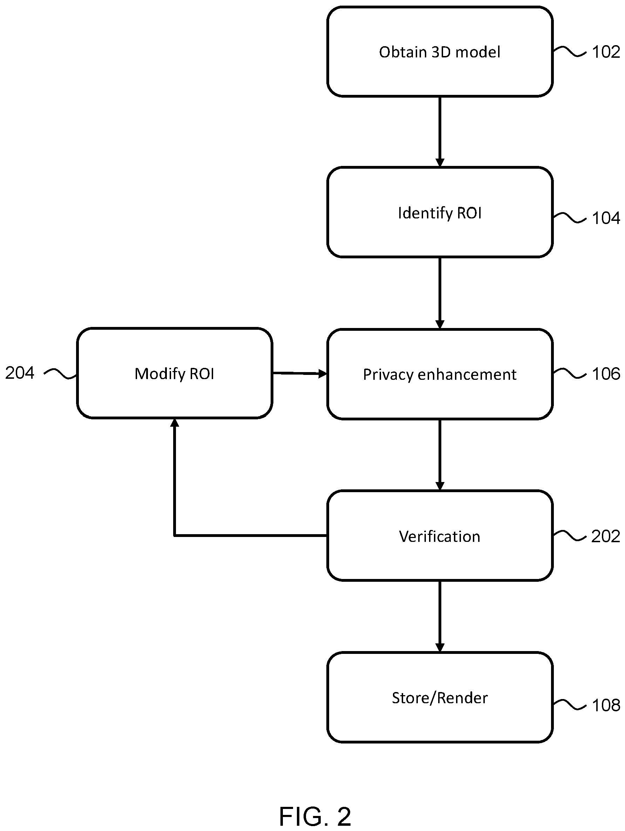

Fig. 2 shows a second method for de-identifying sensitive information from a 3D capture system. The method shown in Fig. 2 contains all of the steps of the method of Fig. 1. However, in this second method, a verification step 202 has been added between the privacy enhancement step 106 and the storing/rendering step 108.

The verification step 202 is used to verify the correct detection, identification and application of the ROIs in the 3D model. For example, this could be achieved by having a trusted third party observer manually checking that the ROIs are in the correct place in real-time. Of course, the verification step 202 can be performed afterwards if the modified 3D model is stored for later use. If the verification step 202 determines a ROI is not correct (e.g. it is in the wrong position, or a ROI is present where there shouldn't be one), the ROI can be modified in step 204 to ensure it is correct. For example, modifying the ROI may include modifying the position of the ROI to the correct position, corresponding to the sensitive information, or removing a ROI which does not correspond to sensitive information. Of course, the verification step 202 may also lead to the identification of further ROIs which may not have been previously identified.

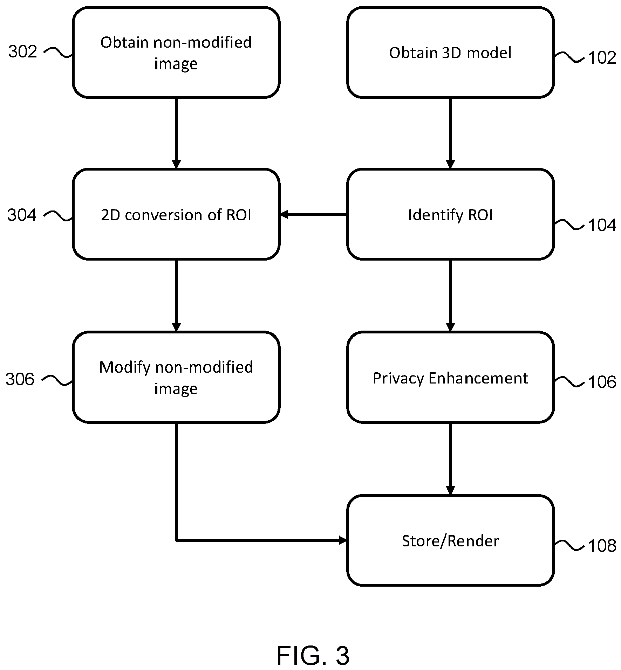

Fig. 3 shows a third method for de-identifying sensitive information from a 3D capture system. The method shown in Fig. 3 contains all of the steps of the method of Fig. 1. However, in this method, an additional, non-modified image is also obtained from an additional 2D capture system (e.g. a conventional camera) independently from the 3D model in step 302.

Using the viewport of the camera in the 3D scene (i.e. the angle and position of the camera), the position of the ROI can be projected/converted into a 2D area in the non-modified image which corresponds to the ROI in step 304. Thus, the area of the non-modified image corresponding to the ROI can be modified (e.g. blurred, removed and/or replaced) to de-identify the non-modified image in step 306. As such, a user can choose to render a 2D image from the modified 3D model or view the now-modified image at the camera viewport. The modified image can also be stored together with the modified 3D model.

For example, the additional camera may be a body-worn camera on a surgeon. The feed from this additional camera also needs to be privacy enhanced. This can be achieved by translating the ROI from the 3D domain in the 3D model to the 2D domain of the additional camera so long as the relative position of the additional camera within the scene is known. Thus, a user can view the scene from the camera viewport as obtained by the additional camera.

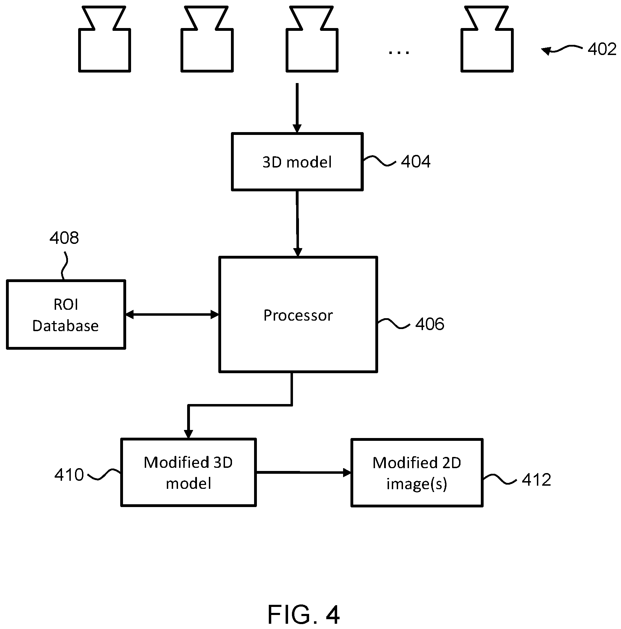

Fig. 4 shows a system for de-identifying sensitive information in a 3D model of a scene. A 3D capture system 402 is used to capture/generate a 3D model of the scene it is imaging. For example, a plurality of cameras may be used by the 3D capture system. The images from the plurality of cameras can be registered to each other (e.g. from knowledge of the relative positions of the cameras) and used to generate a 3D geometry (e.g. depth map, point clouds, meshes or otherwise) of the scene. The 3D model 404 comprises the 3D geometry of the scene and may comprise the texture values (e.g. color and transparency) of objects in the scene. Of course, other 3D imaging methods could also be used (e.g. LIDAR).

The 3D model 404 is fed into a processor 406 which identifies the ROIs in the scene and modifies them accordingly, thereby to de-identify sensitive information. This may be achieved by checking a ROI database 408 indicating possible positions and/or objects to look out for in the scene. Of course, when a ROI is detected, this can be fed back into the ROI database 408.

As such, the processor can output a modified, de-identified, 3D model 410 of the scene. The modified 3D model 410 can now be used to render a modified, de-identified, 2D image 412 of the scene. Of course, in the case of AR and/or VR, the 3D model can be used to render two separate 2D images of the scene simulating two views from the eyes of a user, thereby generating an immersive experience when viewed on an AR/VR headset.

As will be appreciated, the concepts described herein are useful for any situation where 3D scene capture is used, particularly for remote education, training and monitoring in clinical spaces.

In education and research, for example, video recordings are already used for medical students and healthcare professionals. Videos of diagnoses and treatments are used as examples for these users to learn from. As these videos are commonly distributed, the confidentiality of subjects in the video can be maintained by the concepts proposed herein.

In diagnosis and treatment, 3D scene capture allows a remote expert to guide a local health-care professional. The proposed solution ensures data confidentiality of the patient, staff and any others (e.g. family) to be maintained.

Of course, non-medical 3D captures can also benefit from de-identification at the 3D model, such as court rooms. In the case of a 3D capture of a court room, for example, the witness stand may be identified as a ROI and thus the witnesses can be de-identified in the 3D model.

The invention may be applied to 3D imaging of any space containing information which is to be de-identified, before images are rendered from the 3D model created by the 3D imaging system.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method for de-identifying sensitive information, the method comprising:
obtaining (102) a three dimensional, 3D, model of a scene;
identifying (104) a region of interest, ROI, in the 3D model corresponding to sensitive information; and
modifying (106) the 3D model of the scene to de-identify the sensitive information contained in the ROI.

2. The method of claim 1, further comprising generating (108) a two dimensional, 2D, image of the scene at a target viewport using the modified 3D model.

3. The method of claim 1 or 2, wherein modifying the 3D model comprises modifying texture values of the ROI in the 3D model.

4. The method of any of claims 1 to 3, wherein modifying the 3D model comprises modifying a geometry of the ROI in the 3D model.

5. The method of any of claims 1 to 4, further comprising:
receiving (302) a non-modified image of the scene taken at a camera viewport;
identifying (304) an area of the non-modified image corresponding to the projection of the ROI from the camera viewport; and
modifying (306) the identified area in the non-modified image to de-identify the information contained in the ROI.

6. The method of any of claims 1 to 5, wherein identifying the ROI comprises identifying a person in the scene, estimating the pose of the identified person and determining whether the pose corresponds to a pre-determined pose.

7. The method of any of claims 1 to 6, further comprising:
receiving (202) a verification that the ROI is in the correct position relative to the position of the sensitive information in the 3D model; and
modifying (204) the position of the ROI based on the verification.

8. A computer program carrier comprising computer program code which, when executed on a processing system, cause the processing system to perform all of the steps of the method according to any of claims 1 to 7.

9. A system for de-identifying sensitive information, the system comprising a processor (406) configured to:
obtain a three dimensional, 3D, model (404) of a scene;
identify a region of interest, ROI, in the 3D model corresponding to sensitive information; and
modify the 3D model of the scene to de-identify the sensitive information contained in the ROI.

10. The system of claim 9, wherein the processor is further configured to generate a two dimensional, 2D, image (412) of the scene at a target viewport using the modified 3D model (410).

11. The system of claims 9 or 10, wherein the processor is configured to modify the 3D model by modifying texture values of the ROI in the 3D model.

12. The system of any of claims 9 to 11, wherein the processor is configured to modify the 3D model by modifying geometry values of the ROI in the 3D model.

13. The system of any of claims 9 to 12, wherein the processor is further configured to:
receive a non-modified image of the scene taken at a camera viewport;
identify pixels in the non-modified image corresponding to the projection of the ROI from the camera viewport; and
modify the identified pixels in the non-modified image to de-identify the information contained in the ROI.

14. The system of any of claims 9 to 13, wherein the processor is configured to identify the ROI by identifying a person in the scene, estimating the pose of the identified person and determining whether the pose corresponds to a pre-determined pose.

15. The system of claims 9 to 14, further comprising a 3D imaging system (402) configured to generate the 3D model of the scene.
